Europäisches Patentamt

European Patent Office

Office européen des brevets

(19)

(11) Veröffentlichungsnummer: **0 367 107 B1**

## (12) EUROPÄISCHE PATENTSCHRIFT

(45) Veröffentlichungstag der Patentschrift: **23.12.92**

(51) Int. Cl.⁵: **B60T 15/04**

(21) Anmeldenummer: **89119902.8**

(22) Anmeldetag: **26.10.89**

(54) Zweikreisbremsventil, insbesondere Fussbremsventil für Bremsanlagen von Fahrzeugen.

(30) Priorität: **31.10.88 DE 3837055**

(43) Veröffentlichungstag der Anmeldung:
**09.05.90 Patentblatt 90/19**

(45) Bekanntmachung des Hinweises auf die
Patenterteilung:
**23.12.92 Patentblatt 92/52**

(84) Benannte Vertragsstaaten:
**DE FR IT SE**

(56) Entgegenhaltungen:
**EP-A- 0 070 407**
**EP-A- 0 151 988**
**FR-A- 2 286 035**

(73) Patentinhaber: **KNORR-BREMSE AG**
**Moosacher Strasse 80 Postfach 401060**
**W-8000 München 40(DE)**

(72) Erfinder: **Vollmer, Otto**
**Joergstrasse 50**
**W-8000 München 21(DE)**

# Beschreibung

Die Erfindung betrifft ein Zweikreis-Bremsventil nach dem Gattungsbegriff des Patentanspruches 1.

Um bei Abbremsung von Fahrzeugen eine optimale Bremskraftverteilung zu erzielen und bei Teilbremsungen eine thermische Überlastung der Vorderradbremsen (erhöhter Belagverschleiß) an Zugfahrzeug oder Anhänger zu vermeiden, wird bei bekannten Anlagen, siehe z.B. EP-0 151 988, im Vorderachsbremskreis zwischen Fußbremsventil und den Bremszylindern ein gesondertes Rückhalteventil eingebaut. Dieses Ventil hält den eingesteuerten Druck um einen bestimmten Wert im unteren Druckbereich zurück, bei steigendem Druck erfolgt ein Ausgleich zwischen ein- und ausgesteuertem Bremsdruck. Derartige Rückhalteventile mit Schnellentlüftung werden z.B in Anhängerbremsanlagen mit Dauerbremse eingebaut, wenn die Vorderachse mit größeren Bremszylindern ausgerüstet ist als die Hinterachse. Mit Hilfe der Druckrückhaltung wird hierdurch bei Talfahrten oder längeren Teilbremsungen eine thermische Überlastung der Radbremse vermieden.

Ausgehend von derartigen Anlagen besteht die Aufgabe der Erfindung darin, eine gegenüber bekannten Anlagen baulich wesentlich vereinfachte Vorrichtung zu schaffen, mit welcher in absolut zuverlässiger Weise eine Druckrückhaltung im zweiten Kreis erzielt werden kann.

Zur Lösung dieser Aufgabe dienen die Merkmale nach dem Kennzeichnungsteil des Patentanspruches 1.

Die Vorrichtung zur Druckrückhaltung ist mit einfachen Mitteln in das Fußbremsventil integriert; hierdurch entfällt das separate Rückhalteventil und der damit verbundene Installationsaufwand. Trotz Integration des Rückhalteventils im Fußbremsventil ist die Funktion in keiner Weise nachteilig beeinflußt. Es ist auch möglich, derartige Rückhalteventileinrichtungen bei Verwendung von Ventil-Zwischengehäusen nachzurüsten. Der gegenüber dem Relaiskolben wirkende Hilfskolben, welcher auf einer vorbestimmten Ringfläche vom ausgesteuerten Druck des zweiten Kreises, des Vorderachsbremskreises, beaufschlagbar ist, kann verschiedene Konfigurationen besitzen; nach einer vorteilhaften Ausführungsform ist er mit seinen Dichtungen ausschließlich an dem die Feder abstützenden Zwischenboden geführt, eine Hysterese-Auswirkung auf den Relaiskolben und somit auf die Betätigung des zweiten Kreises entfällt.

Die Erfindung ist nachfolgend anhand von Ausführungsbeispielen unter Bezugnahme auf die beigefügte Zeichnung erläutert.

Fig.1 ist eine Schnittansicht eines Zweikreis-Bremsventils gemäß der Erfindung;

Fig.2 gibt als Diagramm den ausgesteuerten Druck des ersten und des zweiten Kreises gegenüber dem Ventil-Betätigungsweg wieder, wobei die Druckrückhaltung im unteren Druckbereich bis zu einem Schwellwert $p_b$ dargestellt ist; und

Fig.3 ist eine der Fig.1 vergleichbare Schnittansicht eines Zweikreis-Bremsventils gemäß einer weiteren Ausführungsform nach der Erfindung.

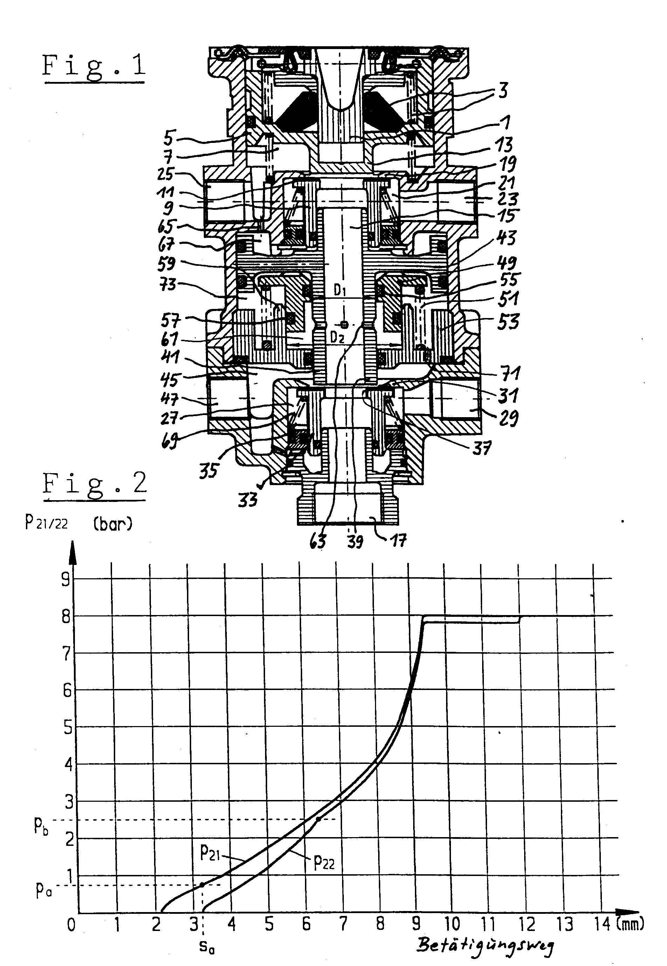

Das in Fig.1 der Zeichnung wiedergegebene Fußbremsventil, bei welchem die erfindungsgemäße Vorrichtung zur Druckrückhaltung des zweiten Kreises verwirklicht ist, weist in bekannter Weise ein Druckstück 1 auf, welches sich über eine Federanordnung 3 an einem Kolben 5 abstützt, so daß der Kolben 5 bei Fußbremsbetätigung gemäß Darstellung nach unten gerichtet verschoben wird. Der Kolben 5 begrenzt eine Kammer 7 und wirkt gegenüber einem am oberen Ende einer Ventilhülse 9 angeordneten, ringförmigen Ventilelement 11. Das Ventilelement 11 bildet mit dem axial gerichteten, unteren Fortsatz 13 des Kolbens 5 ein Auslaßventil, welches in geöffneter (dargestellter) Position die Kammer 7 mit einem im Inneren der Ventilhülse 9 vorgesehenen Entlüftungskanal 15. Dieser durchsetzt das gesamte Bremsventil und mündet in einem an der Unterseite vorgesehenen Entlüftungsauslaß 17. Das Ventilelement 11 wirkt außerdem in dargestellter Weise gegenüber einem gehäusefesten Ventilsitz 19, mit welchem es ein Einlaßventil bildet; zwischen dem Ventilsitz 19 und der Ventilhülse 9 ist eine Einlaßkammer 21 gebildet, in welche ein mit einem Druckluftvorrat des ersten Kreises verbundener Anschluß 23 mündet. Die Einlaßkammer 21 steht bei geschlossenem Auslaßventil und bei geöffnetem Einlaßventil mit der Kammer 7, der Bremsluftkammer des ersten Kreises, in Verbindung, so daß die Druckluft aus der Einlaßkammer 21 über die Kammer 7 und einen weiteren Anschluß 25 in die Bremszylinder der Hinterachse des Fahrzeuges (Zugfahrzeug oder Anhänger) gelangt, um diese zu betätigen. Beim Ventilmechanismus des zweiten Bremskreises, des Vorderachsbremskreises, ist eine Einlaßkammer 27 vorgesehen, welche über einen Anschluß 29 an einen Druckluftvorrat angeschlossen ist. Die Einlaßkammer ist durch einen gehäusefesten Ventilsitz 31, eine Ventilhülse 33 und eine Dichtungsanordnung 35 begrenzt. Die Ventilhülse 33 trägt ein Ventilelement 37, welches mit einem Ventilsitz 39 ein Auslaßventil besitzt; der Ventilsitz 39 ist am axialen Fortsatz 41 eines zwischen den beiden Bremskreisanordnungen befindlichen Relaiskolbens 43 ausgebildet. Das Auslaßventil ist in geöffneter Lage wiedergegeben; in dieser Position verbindet das Auslaßventil eine Kammer 45, die Bremsluftkammer der Vorderachse, zum Zwecke der Entlüftung der Bremszylinder der Vorderachse mit dem Entlüftungskanal 15 und mit dem Entlüftungsauslaß 17. Die Kammer 45 steht hierfür mittels eines Anschlusses 47 mit den Bremszylindern des zweiten Kreises, d.h. mit den Bremszylindern der Vorderachse in Verbindung. Die Kammer 45 wird durch die in der Einlaßkammer 27 anstehende Druckluft des zweiten Kreises belüftet, wenn der Ventilsitz 39 des Relaiskolbens 43 nach unten geschoben wird und gegenüber dem Ventilelement 37 dichtet, derart, daß der Auslaß geschlossen ist, während gleichzeitig das Ventilelement vom Ventilsitz 31 gelöst wird.

Unterhalb des Relaiskolbens 43 befindet sich ein erfindungsgemäßer Hilfskolben 49, der unter der Verspannung einer Feder 51 steht. Die Feder 51 drückt den Hilfskolben 49 in der Darstellung nach oben gerichtet gegen den Relaiskolben 43, da sich die Feder 51 an ihrem gemäß Darstellung unteren Ende an einem Zwischenboden 53 abstützt. Der Hilfskolben 49 weist an seinem Innen- und Außenumfang je eine Dichtung 55 bzw. 57 auf, wobei die Dichtungen gegenüber dem Außenumfang des axialen Fortsatzes 41 und gegenüber dem Innenumfang eines sich vom Zwischenboden nach oben gerichtet erstreckenden Ringes 59 wirken. Der zwischen der Unterseite des Hilfskolbens 49, dem axialen Fortsatz 41 und dem Hilfskolben 49 befindliche Raum 61 ist mit der Atmosphäre verbunden. Gemäß Darstellung steht hierzu der Raum 61 über eine oder mehrere Bohrungen 63 mit dem Inneren des Fortsatzes des Relaiskolbens 43, also mit dem Entlüftungskanal 15 in Verbindung. Die Wirkungsweise der vorstehend beschriebenen Ventileinrichtung mit Druckrückhaltung im zweiten Kreis ist wie folgt :

Bei an sich bekannter Betätigung des Mechanismus des ersten Bremskreises baut sich der in Fig.2 wiedergegebene Druck p21 auf. Die am ersten Bremskreis ausgesteuerte Druckluft gelangt hierbei über die Bohrung 65 in den Raum 67, wobei die Druckluft nunmehr auf der Oberseite des Relaiskolbens 43 wirksam ist und diesen nach unten gerichtet verschiebt. Beim Ansprechen des zweiten Kreises, wie er durch den Punkt Sa in Fig.2 wiedergegeben ist, ist der Auslaß des Ventils des zweiten Bremskreises geschlossen und der Einlaß öffnet gerade. Die Kraft der Feder 51 wird über den Hilfskolben 49 auf den Relaiskolben 43 übertragen. Sie wirkt in gleicher Richtung wie die von der durch eine Feder 69 abgestützten Ventilhülse 33 auf den Relaiskolben 43 wirkende Kraft. Die Feder 51 ist so ausgelegt, daß bei einem ausgesteuerten Druck $p_a$ (Fig.2) am Kreis 1 der Kreis 2 anspricht. Der in die Kammer 45 ausgesteuerte Druck $p_{22}$ gelangt über die im Zwischenboden 53 befindliche Bohrung 71 auch in den Raum 73, im welchem der Hilfskolben 49 geführt ist. Am Hilfskolben 49 baut sich eine Druckkraft auf, die entgegen der Kraft der Feder 51 nach unten wirkt. Die maßgebende Ringfläche zwischen den Durchmessern D2 und D1 am Hilfskolben 49 ist so bemessen, daß nach einem bestimmten Druck p22 (Fig.2), in unserem Beispiel bei $p_b$, die Wirkung der Rückhalteeinrichtung durch Abheben des Hilfskolbens vom Relaiskolben ausgeschaltet wird. Die im Hilfskolben 49 anstehende Druckkraft

$$P_{22} \cdot (\pi : 4) \cdot (D_2{}^2 - D_1{}^2)$$

ist größer als die von der Feder 51 auf den Hilfskolben 49 ausgeübte Kraft (Reibungen vernachlässigt) . In diesem Fall hebt der Hilfskolben vom Relaiskolben 43 ab. Die Kennlinie $p_{22}$ als Funktion des Druckes über dem Weg verläuft bei weiterem Druckanstieg wie bei einem bekannten Tandem-Fußbremsventil.

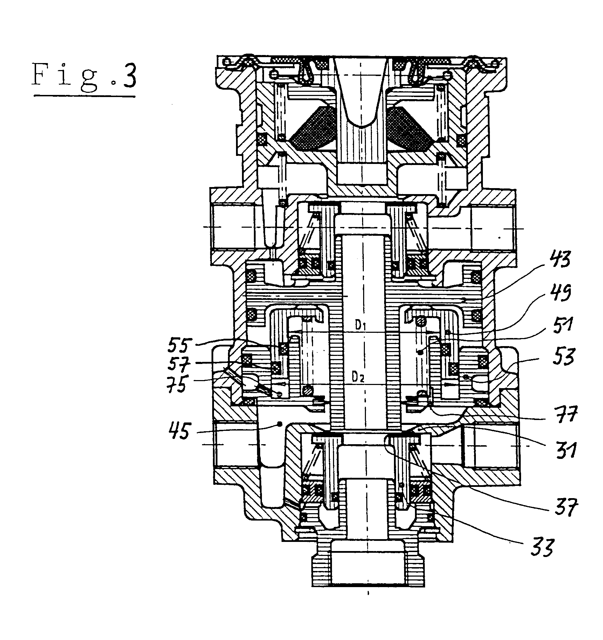

Während bei der Ausführungsform nach Fig.1 der Hilfskolben 49 mit einer inneren Dichtung 55 am Außenumfang des Fortsatzes des Relaiskolbens 43 geführt ist, was Reibungsverluste und als Folge davon verstärktes Hystereseverhalten hervorruft, ist bei der Ausführungsform nach Fig.3 der Hilfskolben 49 mit seinen Dichtungen 55 und 57 radial außerhalb des Ringes 59 geführt, so daß nur Reibung gegenüber den Anlageflächen des Zwischenbodens 53 auftritt. Hierbei ist der Raum 75 unterhalb des Hilfskolbens mit der Atmosphäre verbunden; die Bohrung für das Zuleiten der ausgesteuerten Bremsluft des zweiten Kreises befindet sich als Bohrung 77 radial innerhalb des Ringes, wie aus Fig.3 zu sehen ist. Im übrigen sind die Wirkungsweisen dieser Ventilanordnung dieselben wie diejenigen nach Fig. 1. Es sind auch andere Konfigurationen, d.h. Ausgestaltungen des Hilfskolbens im Zusammenwirken mit dem Relaiskolben 43 möglich, wobei jeweils eine vom ausgesteuerten Druck des zweiten Kreises zu beaufschlagende Ringfläche an einem in der Ausgangsstellung in Anlage am Relaiskolben 43 befindlichen Hilfskolben zur Wirkung gelangt.

**Bezugszeichenliste**

| | |
|---|---|
| 1 | Druckstück |
| 3 | Federanordnung |
| 5 | Kolben |
| 7 | Kammer |
| 9 | Ventilhülse |
| 11 | Ventilelement |
| 13 | Fortsatz |
| 15 | Entlüftungskanal |
| 17 | Entlüftungsauslaß |
| 19 | Ventilsitz |
| 21 | Einlaßkammer |
| 23 | Anschluß |

| 25 | Anschluß |
| 27 | Einlaßkammer |
| 29 | Anschluß |
| 31 | Ventilsitz |
| 33 | Ventilhülse |
| 35 | Dichtungsanordnung |
| 37 | Ventilelement |
| 39 | Ventilsitz |
| 41 | Fortsatz |
| 43 | Kolben |
| 45 | Kammer |
| 47 | Anschluß |
| 49 | Hilfskolben |
| 51 | Feder |
| 53 | Zwischenboden |
| 55 | Dichtung |
| 57 | Dichtung |
| 59 | Ring |
| 61 | Raum |
| 63 | Bohrung |
| 65 | Bohrung |
| 67 | Raum |
| 69 | Feder |
| 71 | Bohrung |
| 73 | Raum |
| 75 | Raum |
| 77 | Bohrung |

## Patentansprüche

1. Fußbremsventil für Bremsanlagen von Fahrzeugen, mit einem durch ein Druckstück betätigbaren, den Druck in einer ersten, mit den Bremszylindern der Hinterachse verbundenen Kammer steuernden Kolben und einem in Betätigungsrichtung vom Druck der ersten Kammer beaufschlagbaren Relaiskolben, welcher den Druck in einer zweiten, mit den Bremszylindern der Vorderachse verbundenen Kammer steuert, und mit einer einen federverspannten Hilfskolben aufweisenden Vorrichtung zur Druckrückhaltung im zweiten Kreis, dadurch gekennzeichnet, daß der Hilfskolben (49) zwischen dem Relaiskolben (43) und einem Zwischenboden (53) im Gehäuse des Fußbremsventils geführt ist, wobei sich die den Hilfskolben gegen den Relaiskolben verspannende Feder (51) am Zwischenboden (53) abstützt, so daß der Hilfskolben (49) auf einer Ringfläche entgegen der Kraft der Feder (51) vom ausgesteuerten Druck des zweiten Kreises beaufschlagbar ist, derart, daß der Hilfskolben (49) nach Überschreiten einer Druckschwelle vom Relaiskolben (43) abhebbar ist, um die Druckrückhaltevorrichtung außer Kraft zu setzen.

## Claims

1. Foot brake valve for brake systems of vehicles with a piston that can be operated by a thrust piece controlling the pressure in a first chamber connected to the brake cylinders of the rear axle and with a relay piston that can be pressurized in actuating direction with pressure from the first chamber which controls the pressure in a second chamber linked to the brake cylinders of the front axle and with a device for pressure retention featuring a spring-braced auxiliary piston in the second circuit, wherein the auxiliary piston (49) is guided between the relay piston (43) and an intermediate bottom (53) in the housing of the foot brake valve, with the spring (51) that braces the auxiliary piston against the relay piston bearing on the intermediate bottom (53) such that the auxiliary piston (49) can be pressurized on the annular surface against the force of the spring (51) by the output pressure of the second circuit, so that the auxiliary piston (49) can be lifted off the relay piston (43) once a pressure threshold is exceeded in order to deactivate the pressure retention device.

## Revendications

1. Soupape de frein à deux circuits, en particulier soupape de frein à pied pour des installations de freinage de véhicules, comportant un piston qui est susceptible d'être actionné par une pièce de pression et qui contrôle la pression qui règne dans une première chambre qui est reliée aux cylindres de frein de l'essieu arrière, ainsi qu'un piston de relais qui est susceptible d'être chargé, dans le sons de l'actionnement, par la pression qui règne dans une seconde chambre qui est reliée aux cylindres de frein de l'essieu avant, et comportant, en outre, un dispositif servant de retenue de la pression qui règne dans le second circuit et comportant un piston auxiliaire soumis à l'action d'un ressort, caractérisée par le fait que le piston auxiliaire (49) est guidé entre le piston de relais (43) et un fond intermédiaire (53) prévu dans le carter de la soupape de frein à pédale, ledit ressort (61) qui charge le piston auxiliaire contre le piston de relais, prenant appui sur le fond intermédiaire (53) de façon que le piston auxiliaire (49) soit susceptible d'être chargé sur une surface annulaire, et à l'encontre de la force du ressort (51), par la pression ajustée du second circuit de manière que le piston auxiliaire (49) puisse, après dépassement d'un seuil de pression, se décoller du piston de relais (43) afin de supprimer l'action du dispositif de retenue de la pression.

## Fig.1

## Fig.2

$p_{21/22}$ (bar)

$s_a$

$Betätigungsweg$

Fig.3